# EUROPEAN PATENT SPECIFICATION

(11) **EP 1 040 293 B1**
(45) Date of publication and mention of the grant of the patent: **02.05.2003**
(21) Application number: 99938427.4
(22) Date of filing: 14.07.1999
(51) Int. Cl.: F16L 13/14

(54) **CONNECTOR FOR THERMOPLASTIC PIPE**
VERBINDUNG FÜR KUNSTSTOFFROHRE
CONNECTEUR POUR TUYAU THERMOPLASTIQUE

(30) Priority: 28.10.1998 GB 9823569
(43) Date of publication of application: 04.10.2000
(73) Proprietor: Gloway International Inc., Road Town, Tortola (VG)
(72) Inventor: Ball, Daniel Graham, Darlington, County Durham Dl3 7UE (GB)
(74) Representative: Marshall, John Grahame
(86) International application number: GB9902274
(87) International publication number: WO00025055

(56) References cited:
- EP-B- 0 727 026
- FR-A- 490 606

## Description

### TECHNICAL FIELD

The invention relates to a system of pipe fittings for joining potentially fragile plastic pipes. Reinforced Thermoplastic (RTP) pipes are pipes constructed of thermoplastic materials reinforced with high strength fibres that increase the strength of the pipes without losing any flexibility or corrosive resistance. If conventional pipe fittings are joined onto these pipes, the pipes have a high tendency to break at the join.

Another potentially fragile pipe system which can be joined by pipe fittings according to the invention is a swage-lined pipe system. Swage-lining is a system of lining existing below-ground decaying pipelines. A below-ground cast iron pipe has a trouble-free lifetime of the order of 50 years. After that time there is a risk that corrosion will extend in places through the pipe wall, causing leaks. Most of the pipeline after 50 years will retain its structural strength and integrity. However even one corrosion hole makes the pipeline unserviceable. Systems of lining such pipelines have therefore been developed. One such lining system is swage-lining. A thin-walled lining pipe of a thermoplastic material such as polyethylene with an elastic memory, of a natural external diameter the same as or even marginally greater than the internal diameter of the pipelines is compressed by passing it through a swage, and is then fed into the pipeline to be lined. The liner pipe is pushed from one end and pulled from the other, and pipeline lengths of up to 1000 metres can be lined in a single run. As the thermoplastic lining pipe recovers its original diameter it expands against the inner wall of the original cast iron pipeline which gives it its structural strength.

Unfortunately during the feeding of the lining pipe down the original pipeline often creates longitudinal stresses in the lining pipe. If the lining pipe has sections under tension as it is laid it will stretch, but once laid its elastic memory causes it to try to shrink back to its original length. That places undesirable tension on the fittings used to connect to the lining pipe, and there is a high risk of failure of the joints created by those fittings. The fitting system of the invention is useful in reducing that failure risk.

The fitting system of the invention can thus be applied to plain end RTP pipes or to swage-lined pipes and will not detract from the strength of the pipeline system whether the fittings are used for joining pipe, or attaching valves, bends or plugs.

### BACKGROUND ART

It is an established practice to use pipe fittings that rely on friction rings and grippers in pipeline assemblies when the force or energy that applies pressure to the grippers and to the seals is the result of a series of bolts tightened to a predetermined torque. The resulting connections have relatively low pressure ratings typically between 10 and 20 BARS. Other known systems use hydraulic pressure acting on grippers and seals, and are rated to much higher pressures. All these systems suffer various disadvantages when used on thermoplastic pipes because of the creep and flexible characteristics of these pipes. The disadvantages are increased when higher pressure RTP pipes and swage lining pipes require to be joined in the field rather than by fittings attached at the point of manufacture. These disadvantages can even make field installations virtually impossible.

An ideal system should allow for the connection system to be capable of joining the pipes without any loss of strength and be capable of assembly in the field accommodating off-circular as well as circular pipe.

### DISCLOSURE OF THE INVENTION

According to the present invention there is provided a pipe connection for attachment to a plain end of a thermoplastic pipe, comprising a housing for locating around the pipe end portion, an annular recess in the inner surface of the housing containing gripper elements for contacting the outer surface of the pipe end portion and means for moving the gripper elements radially inwardly against the pipe end portion, characterized in that the gripper elements are designed without sharp edges or corners that could contact the pipe end portion, and have radially inwardly facing surfaces which are formed as rounded peaks and/or valleys; and a preformed tubular insert is inserted into the pipe end portion and has an outer surface preformed into one or more cooperating rounded peaks and/or valleys so that on radially inward movement of the gripper elements the pipe end portion is deformed into a shape following the cooperating one or more rounded peaks and/or valleys and is clamped between the gripper elements and the insert. The number of segmented grippers surrounding the pipe will increase with the diameter of the pipe. The grippers are preferably urged against the outer periphery of the pipe end portion by hydraulic pressure as described and claimed in EP-B-727026. Thus when hydraulic pressure is applied they will force the pipe to conform to the shape of the insert. Preferably a recess is formed in each of the gripper elements at an inner surface thereof, the recesses of all of the gripper elements being mutually aligned to form a channel, and a seal member is received in the channel and in use is compressed against an outer surface of the pipe and portion, to compress it against a cylindrical portion of the tubular insert outer surface. The seal member is thus carried by the grippers and is preferably a polymer sealing ring that is designed to make contact with the pipe prior to the grippers, and therefore prior to the reforming of the pipe end portion, to provide maximum sealing and also maximum axial restraint of the pipe against longitudinal forces.

If the pipe is an RTP pipe, then the cooperation between the gripper elements and insert will form undulations in the pipe end portion to grip it firmly without cutting into the pipe surface. More significantly, the KEVLAR (TM) or glass fibres, which provide the internal reinforcement of the RTP pipe end, are not cut or broken, so that the pipe end retains its full structural integrity at the join.

If the pipe is a swaged lining, then because of the relatively thin wall thickness of the lining conventional grippers would cut and weaken the pipe wall. A pipe connector according to the invention avoids that weakening because the gripper elements have no sharp edges or corners in contact with the pipe end portion. However it does hold the pipe end portion sufficiently firmly to resist the natural creep of a swaged lining that has been placed in the pipeline under tension, and the join is reliable and permanent.

### BRIEF DESCRIPTION OF THE DRAWINGS

Figure 1 is a longitudinal section through a pipe connection according to the invention used for joining to RTP pipe ends. The pipe connection is shown as joined to one pipe end and ready to be joined to the other pipe end;
Figure 2 is a staggered section taken along the line A-A of Figure 1; and
Figure 3 is a longitudinal section through another pipe connection according to the invention used for joining an end portion of a swaged pipe liner which projects from an end of a pipeline section.

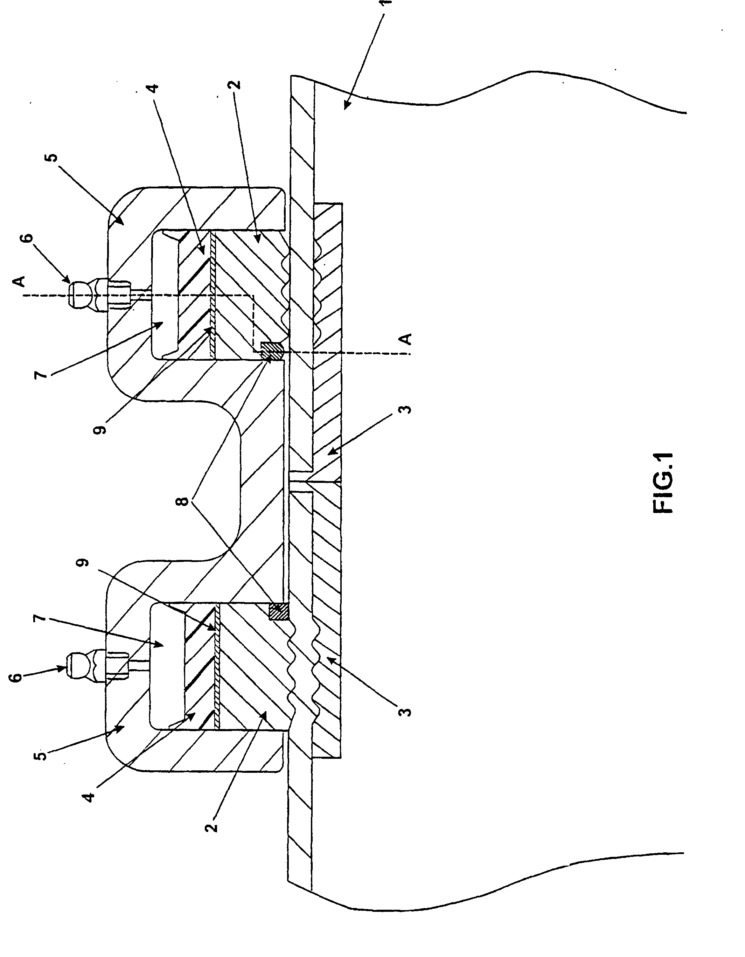

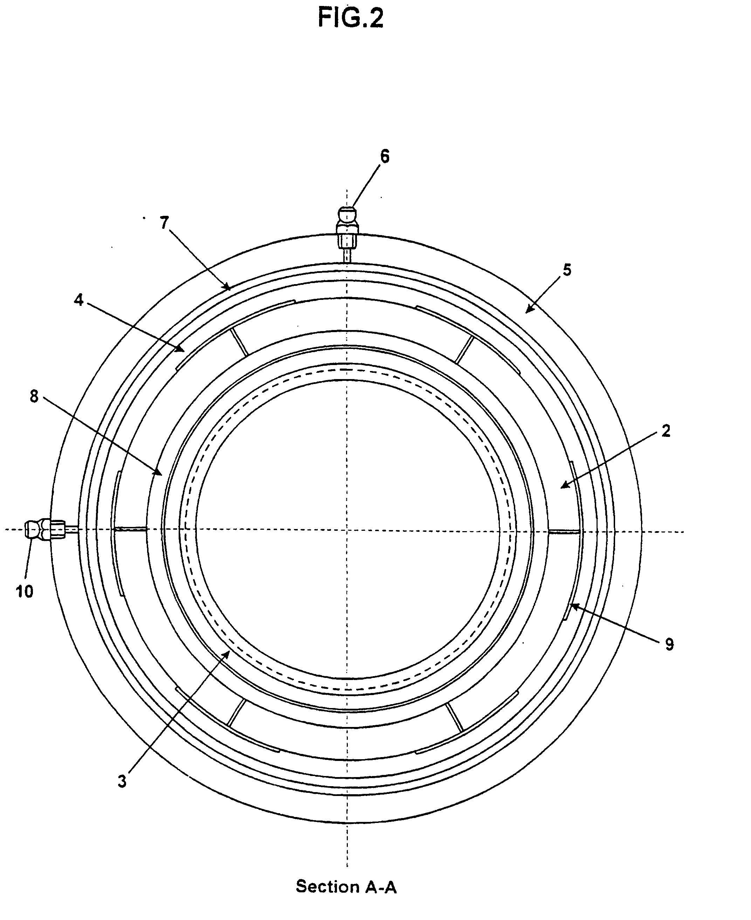

Referring first to Figures 1 and 2, the connection comprises a hollow metal housing 5 in each end of which is formed an annular chamber 7. Each of these chambers 7 houses a circular array of segmented grippers 2 and an annular seal member 4. A circular array of shims 9 spans the spaces between adjacent grippers 2 and prevents entrapment of the seal 4 between adjacent grippers.

A recess is formed in each of the grippers 2, the various recesses being in alignment to form an annular channel, housing an annular pipe seal 8 which in its natural state projects slightly inwardly from the annular channel as shown at the right hand half of Figure 1. When the grippers 2 are pressed against the pipe wall as shown at the left hand half of Figure 1 the annular pipe seal 8 is compressed within the annular channel and forms a fluid-tight seal around the pipe end.

The inwardly facing surfaces of the grippers 2 have no sharp corners or edges which could contact and cut the pipe end portion, but are formed as a circular array of rounded peaks and valleys facing the pipe 1. A pipe insert 3 made of metal or hard plastic is a push fit into each pipe end. The pipe inserts 3 are tubular members with an outstanding annular end flange to locate them axially in the pipe ends, and are formed with external annular undulations aligned to line up exactly with the rounded peaks and valleys of the grippers 2. The annular undulations of the inserts 3 and the rounded peaks and valleys of the grippers are totally complementary so that the four peaks and three valleys of each gripper line up with the complementary shaped four valleys and three peaks of the annular undulations of the corresponding insert 3.

The housing 5 also incorporates a pair of inlet valves 6 in the form of grease nipples each communicating with one of the annular chambers 7. Bleed valves 10 (Figure 2) are also provided for bleeding air from the chambers 7 prior to pressurization of the chambers.

When the chambers 7 are packed with grease under a hydraulic pressure of up to several thousand BARS, the hydraulic pressure will press onto the annular seal 4 which in turn presses on the segmented grippers 2 and the pipe seal 8. The grippers 2 and pipe seal 8 move radially inwards until the pipe seal 8 touches and seals the pipe which is reformed to conform to the shape of the grippers 2 and the insert 3. The pipe end is thus gripped between the cooperating undulations of the surface of the pipe insert 3 and the grippers 2. It is a feature of the invention that the pipe insert 3 is shaped to be complementary to the rounded peaks and valleys form of the grippers 2.

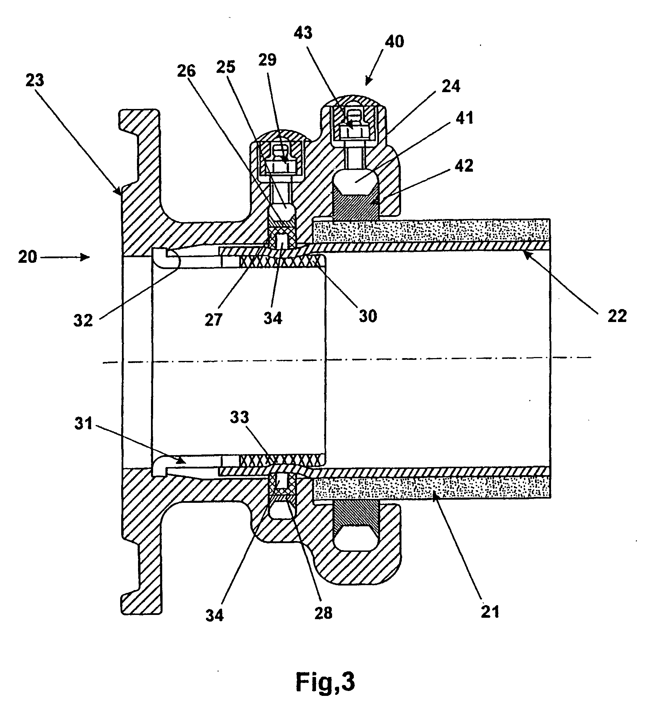

Referring next to Figure 3, there is shown a pipe connection 20 for attachment to an end of a section of a pipeline 21, for example a below-ground cast iron pipeline 21, that has been lined with a tubular swaged lining 22. The connection 20 of Figure 3 is formed with a coupling flange 23 which may be used to connect to a similar connection 20 or to an end cap, reducer, T-junction, stopcock or any other item of pipeline hardware.

The tubular swaged lining 22 is typically a thermoplastic lining formed from a material such as polyethelene which has an elastic memory. The lining 22 is relatively thin-walled compared with the RTP pipe of Figure 1 and the thin-ness of the wall renders it liable to tearing if it is placed under tension. Unfortunately the swage-lining process involves pushing one end and pulling the other end of the liner through the pipeline 21, so that the leading end of the lining is generally under tension at the end of the lining process and tends to creep back into the pipeline after lining, by virtue of its elastic memory. The connection 20 of Figure 3 securely retains and seals the end portion of the lining while minimizing the risk of tearing.

The pipe connection 20 of Figure 3 comprises a housing 24 in which is formed an annular recess 25 which receives an annular seal 26 and a circular array of gripper segments 27. Shims 28 are inserted between the gripper elements 27 and the seal 26, spanning the spaces between the gripper elements as in the embodiment of Figures 1 and 2.

Each gripper element 27 is arcuate, so that the complete circular array of gripper elements 27 provides a segmented circular jaw that can be clamped around the lining 22 by the introduction of high pressure hydraulic fluid such as grease into the annular recess 25 through a grease nipple 29.

A tubular insert 30 is a push-fit into the end of tubular swaged lining 22, and has a segmented and flanged end 31 which locates behind an internal shoulder 32 of the housing 24.

A single annular depression 33 is formed in the outer surface of the insert 30 which is inserted into the end of the swaged lining 22. The gripper elements 27 have a cooperating profile, interrupted by an annular recess containing a sealing member 34. In Figure 3 the annular recess is shown at a mid-point of the rounded inwardly directed face of each gripper element 27. It could however be formed at one end as in the case of the corresponding recess of Figure 1. The gripper elements 27 and sealing member 34 together provide the shape of a single rounded peak which cooperates with the rounded valley of the depression 33, whereby the tubular swaged lining 22 in use is trapped between the grippers 27 and the insert 30 and is reformed to the shape of the rounded valley of the insert 30.

The pipe connection 20 also includes means 40 for sealing around the external surface of the cast iron pipeline end 21. A second annular recess 41 is formed in the housing 24 and carries a sealing ring 42. The recess 41 can be packed with grease and then pressurized via a grease nipple 43, so as hydraulically to clamp the sealing ring 42 against the end portion of the pipeline.

## Claims

1. A pipe connection for attachment to a plain end of a thermoplastic pipe, comprising a housing (5) for locating around the pipe end portion, an annular recess (7) in the inner surface of the housing (5) containing gripper elements (2) for contacting the outer surface of the pipe end portion and means for moving the gripper elements radially inwardly against the pipe end portion, **characterized in that** the gripper elements (2) are designed without sharp edges or corners that could contact the pipe end portion, and have radially inwardly facing surfaces which are formed as rounded peaks and/or valleys; and a preformed tubular insert (3) is inserted into the pipe end portion and has an outer surface preformed into one or more cooperating rounded peaks and/or valleys so that on radially inward movement of the gripper elements the pipe end portion is deformed into a shape following the cooperating one or more rounded peaks and/or valleys and is clamped between the gripper elements and the insert.

2. A pipe connection according to claim 1, wherein the means for moving the gripper elements radially inwardly is hydraulic, so that when activated, the pipe is sealed and gripped in the same movement by the application of a hydraulic pressure.

3. A pipe connection according to claim 1 or claim 2 for attachment to a RTP (reinforced thermoplastic pipe) pipe, wherein the radially inwardly facing gripper surfaces of the gripper elements are formed as a plurality of undulating peaks and valleys, and the cooperating outer surface of the tubular insert is formed as a cooperating plurality of undulating valleys and peaks.

4. A pipe connection according to claim 3, wherein the gripper elements are formed as a series of four peaks separated by three valleys, all of continuously undulating form.

5. A pipe connection according to claim 3 or claim 4, wherein a recess is formed in each of the gripper elements at an inner surface thereof, the recesses of all of the gripper elements being mutually aligned to form a channel, and a seal member (8) is received in the channel and in use is compressed against an outer surface of the pipe and portion, to compress it against a cylindrical portion of the tubular insert outer surface.

6. A pipe connection according to claim 1 or claim 2 for attachment to a swage liner of a pipeline and to the pipeline itself, wherein the housing (24) comprises a first portion for surrounding the external diameter of an end portion of the pipeline, and a second portion for location around and anchorage to the end portion of the swage lining of the pipeline extending from the pipeline end portion.

7. A pipe connector according to claim 6, wherein each of the gripper elements (27) is formed with one inwardly facing rounded peak and the insert is formed with one cooperating rounded annular valley around its outer periphery.

8. A pipe connector according to claim 7, wherein the one rounded peak of each of the gripper elements is formed in part by a circular array of segmented gripper elements and in part by an EPDM pipe seal (34) contained in a housing formed in the gripper elements.

## Patentansprüche

1. Rohrverbindung zum Anbringen an ein glattes Ende eines thermoplastischen Rohrs, aufweisend: ein um den Rohrendabschnitt herum anzuordnendes Gehäuse (5), eine ringförmige Aussparung (7) in der Innenfläche des Gehäuses (5), die Greiferelemente (2) zum Eingriff mit der Außenfläche des Rohrendabschnitts enthält, und Einrichtungen zum Bewegen der Greiferelemente radial nach innen an den Rohrendabschnitt, **dadurch gekennzeichnet, daß** die Greiferelemente (2) ohne scharfe Kanten und Ecken konstruiert sind, die den Rohrendabschnitt berühren könnten, und radial nach innen weisende Oberflächen haben, die als gerundete Spitzen und/oder Täler gestaltet sind; und daß ein vorgeformter rohrförmiger Einsatz (3) in den Rohrendabschnitt eingesetzt ist und eine in eine oder mehrere zusammenwirkende gerundete Spitzen und/oder Täler vorgeformte Außenfläche hat, so daß bei einer Bewegung der Greiferelemente radial nach innen der Rohrendabschnitt in eine Gestalt verformt wird, die dem Zusammenwirkenden einen oder mehreren gerundeten Spitzen und/oder Täler folgt, und zwischen den Greiferelementen und dem Einsatz geklemmt wird.

2. Rohrverbindung nach Anspruch 1, wobei die Einrichtung zum Bewegen der Greiferelemente radial nach innen hydraulisch ist, so daß bei ihrer Betätigung durch Anlegen eines hydraulischen Drucks das Rohr in ein und derselben Bewegung abgedichtet und gegriffen wird.

3. Rohrverbindung nach Anspruch 1 oder Anspruch 2 zum Anbringen an ein RTP-Rohr (verstärktes thermoplastisches Rohr), wobei die radial nach innen weisenden Greiferflächen der Greiferelemente als mehrere wellenförmige Spitzen und Täler gestaltet sind und die zusammenwirkende Außenfläche des rohrförmigen Einsatzes als mehrere zusammenwirkende wellenförmige Täler und Spitzen gestaltet ist.

4. Rohrverbindung nach Anspruch 3, wobei die Greiferelemente als eine Reihe von vier Spitzen, getrennt durch drei Täler, gestaltet sind, alle in Form einer fortlaufenden Welle.

5. Rohrverbindung nach Anspruch 3 oder Anspruch 4, wobei in jedem Greiferelement an einer inneren Oberfläche eine Aussparung gebildet ist, wobei die Aussparungen aller Greiferelemente zueinander ausgerichtet sind, um einen Kanal zu bilden, und ein Dichtungselement (8) in dem Kanal aufgenommen ist und im Gebrauch an eine Außenfläche des Rohrendabschnitts gepreßt wird, um diesen an einen zylindrischen Abschnitt der Außenfläche des rohrförmigen Einsatzes zu pressen.

6. Rohrverbindung nach Anspruch 1 oder Anspruch 2 zum Anbringen an ein Preßfutter einer Rohrleitung und an die Rohrleitung selbst, wobei das Gehäuse (24) einen ersten Abschnitt, zum Umgeben des Außendurchmessers eines Endabschnitts der Rohrleitung, und einen zweiten Abschnitt aufweist, der um den vom Rohrleitungsendabschnitt aus sich' erstreckenden Endabschnitt des Preßfutters der Rohrleitung herum anzuordnen und daran zu verankern ist.

7. Rohrverbindung nach Anspruch 6, wobei jedes Greiferelement (27) mit einer nach innen weisenden gerundeten Spitze gestaltet ist und der Einsatz um seinen Außenrand herum mit einem zusammenwirkenden gerundeten ringförmigen Tal gestaltet ist.

8. Rohrverbindung nach Anspruch 7, wobei die eine gerundete Spitze jedes Greiferelements teilweise von einer kreisförmigen Anordnung aus segmentierten Greiferelementen und teilweise von einer EPDM-Rohrdichtung (34) gebildet wird, die in einem in den Greiferelementen gebildeten Gehäuse enthalten ist.

## Revendications

1. Connexion pour tuyau destinée à être attachée à une extrémité lisse d'un tuyau thermoplastique, comprenant une enveloppe (5) à placer autour de la partie d'extrémité du tuyau, une encoche annulaire (7) dans la surface intérieure de l'enveloppe (5) contenant des éléments de préhension (2) pour entrer en contact avec la surface extérieure de la partie d'extrémité du tuyau et des moyens pour déplacer les éléments de préhension radialement vers l'intérieur par rapport à la partie d'extrémité du tuyau, **caractérisé en ce que** les éléments de préhension (2) sont conçus sans angles ni coins vifs pouvant entrer en contact avec la partie d'extrémité du tuyau, et possèdent des surfaces orientées radialement vers l'intérieur qui ont la forme de pics et/ou vallées arrondis ; et un insert tubulaire préformé (3) est inséré dans la partie d'extrémité du tuyau et présente une surface extérieure préformée selon un ou plusieurs pics et/ou vallées arrondis coopérants de telle sorte que lorsque les éléments de préhension se déplacent radialement vers l'intérieur, la partie d'extrémité du tuyau se déforme en une forme qui suit le ou la ou les pics et/ou vallées arrondis coopérants et est bloquée entre les éléments de préhension et l'insert.

2. Connexion pour tuyau selon la revendication 1, dans laquelle le moyen pour déplacer les éléments de préhension radialement vers l'intérieur est hydraulique, de telle sorte que lorsqu'il est activé le tuyau est scellé et saisi dans le même mouvement par l'application d'une pression hydraulique.

3. Connexion pour tuyau selon la revendication 1 ou la revendication 2, destinée à être attachée à un tuyau TTR (tuyau en thermoplastique renforcé), dans laquelle les surfaces de prise orientées radialement vers l'intérieur des éléments de préhension ont la forme d'une pluralité de pics et de vallées ondulés et la surface extérieure coopérante de l'insert tubulaire a la forme d'une pluralité coopérante de vallées et pics ondulés.

4. Connexion pour tuyau selon la revendication 3, dans laquelle les éléments de préhension sont constitués par une série de quatre pics séparés par trois vallées, ayant tous une forme ondulée continue.

5. Connexion pour tuyau selon la revendication 3 ou la revendication 4, dans laquelle une encoche est formée dans chaque élément de préhension sur une surface intérieure de celui-ci, les encoches de tous les éléments de préhension étant mutuellement alignées pour former un canal, et un élément d'étanchéité (8) est reçu dans le canal et est comprimé en utilisation contre une surface extérieure de la partie d'extrémité de tuyau pour le comprimer contre une partie cylindrique de la surface extérieure de l'insert tubulaire.

6. Connexion pour tuyau selon la revendication 1 ou la revendication 2 destinée à être attachée à un revêtement embouti d'une canalisation et à la canalisation elle-même, dans laquelle l'enveloppe (24) comprend une première partie pour entourer le diamètre externe d'une partie d'extrémité de la canalisation et une deuxième partie à placer autour de et à ancrer à la partie d'extrémité du revêtement embouti de la canalisation s'étendant depuis la partie d'extrémité de la canalisation.

7. Connexion pour tuyau selon la revendication 6, dans laquelle chacun des éléments de préhension (27) est formé avec un pic arrondi tourné vers l'intérieur et l'insert est formé avec une vallée annulaire arrondie coopérante autour de sa périphérie extérieure.

8. Connexion pour tuyau selon la revendication 7, dans laquelle le pic arrondi de chaque élément de préhension est constitué partiellement par un ensemble circulaire d'éléments de préhension segmentés et partiellement par un joint de tuyau en EPDM (34) dans un logement formé dans les éléments de préhension.
